# EUROPÄISCHE PATENTSCHRIFT

(11) **EP 1 599 364 B1**
(45) Veröffentlichungstag und Bekanntmachung des Hinweises auf die Patenterteilung: **05.09.2007**
(21) Anmeldenummer: 03770896.3
(22) Anmeldetag: 06.10.2003
(51) Int. Cl.: B60R 21/01

(54) **VERFAHREN UND VORRICHTUNG ZUR BESTIMMUNG EINER UNFALLWAHRSCHEINLICHKEIT EINES FAHRZEUGS**
METHOD AND DEVICE FOR DETERMINING THE PROBABILITY OF AN ACCIDENT FOR A VEHICLE
PROCEDE ET DISPOSITIF POUR DETERMINER LA PROBABILITE D'ACCIDENT D'UN VEHICULE

(30) Priorität: 28.01.2003 DE 10303148
(43) Veröffentlichungstag der Anmeldung: 30.11.2005
(73) Patentinhaber: ROBERT BOSCH GMBH, 70442 Stuttgart (DE)
(72) Erfinder: KROENINGER, Mario, 77815 Buehl (DE); SCHMID, Michael, 70806 Kornwestheim (DE); LAHMANN, Robert, 70174 Stuttgart (DE); LICH, Thomas, 71409 Schwaikheim (DE); ROELLEKE, Michael, 71229 Leonberg-Hoefingen (DE)
(86) Internationale Anmeldenummer: PCT/DE2003/003301
(87) Internationale Veröffentlichungsnummer: WO 2004/069602

(56) Entgegenhaltungen:
- DE-A- 10 019 416
- DE-A- 10 019 417
- DE-A- 10 049 905
- DE-A- 10 148 667
- US-B1- 6 405 132

## Beschreibung

### Stand der Technik

Die Erfindung geht aus von einem Verfahren bzw. einer Vorrichtung zur Bestimmung einer Unfallwahrscheinlichkeit eines Fahrzeugs nach der Gattung der unabhängigen Patentansprüche.

Aus US 6, 405, 132 B1 (GB 2 373 117 A oder WO 00/54008 A1) ist ein System und ein Verfahren zur Vermeidung von Fahrzeugunfällen bekannt, wobei mittels GPS der Ort des Fahrzeugs sehr genau bestimmt wird. Das Fahrzeug erhält über eine Fahrzeug-Fahrzeugkommunikation Informationen von anderen Fahrzeugen und bestimmt, ob diese anderen Fahrzeuge eine Unfallgefahr für das Fahrzeug darstellen. Wird eine solche Unfallgefahr erkannt, erfolgt eine Warnung oder es erfolgt ein Steuersignal, um die Kollision zu vermeiden.

### Vorteile der Erfindung

Das erfindungsgemäße Verfahren bzw. die erfindungsgemäße Vorrichtung zur Bestimmung einer Unfallwahrscheinlichkeit eines Fahrzeugs mit den Merkmalen der unabhängigen Patentansprüche haben den Vorteil, dass aufgrund des Ortungssignals bereits frühzeitig vor Gefahrensituationen auf diese Gefahrensituationen präventiv reagiert werden kann. Zu solchen Gefahrensituationen gehören Schleudern, Überrollvorgänge oder ein Ausbrechen aus der Fahrbahn, was damit bereits frühzeitig gestoppt werden kann. Durch das Ortungssignal wird die Straßenart bestimmt und ein Schluss auf die zukünftige Fahrdynamik gezogen. Damit können insbesondere gefährliche Kurven und andere kritische Fahrsituationen antizipiert werden, um hier einen Unfall zu vermeiden. Weiterhin ist es möglich, bei einem Gelände, das einen Überrollvorgang, vorzugsweise um die Fahrzeugslängsachse, begünstigt, frühzeitig Präventivmaßnahmen gegen mögliche Überrollvorgänge einzuleiten. Auch dies ist mit der erfindungsgemäßen Vorrichtung bzw. mit dem erfindungsgemäßen Verfahren möglich. Das Signal, vorzugsweise ein GPS (Global Positioning Signal) wird derart bewertet, dass eine Schätzung der aktuellen Fahrsituation, bezogen auf die derzeit gefahrene Straße oder Gelände durchgeführt wird. Insbesondere bei Off Road-Fahrten, wie sie mit einem geländegängigen Fahrzeug leicht möglich sind, ist die erfindungsgemäße Vorrichtung bzw. das erfindungsgemäße Verfahren besonders vorteilhaft. Die Ortungsinformation kann dabei in mehrfacher Weise berücksichtigt werden, zum einen wird der Ort bestimmt, um damit weitere Daten wie Wetter und Straßenverhältnisse zu verknüpfen. Diese weiteren Daten können beispielsweise in einem Navigationssystem bereits vorliegen, oder werden von einer zentralen Datenbank, beispielsweise über Mobilfunk oder Rundfunksignale, empfangen. Weiterhin ist es möglich, aus dem Ortungssignal auf den Straßenverlauf bzw. die Straßenlage zu schließen. Auch dies ist über eine Verknüpfung mit weiteren Daten möglich, die dem Ortungssignal den Straßenverlauf zuordnen.

Weiterhin ist es von Vorteil, dass das erfindungsgemäße Verfahren wie folgt abläuft: Mittels des Ortungssignals wird der Ort des Fahrzeugs bestimmt. Dann folgt in Abhängigkeit von dem Ort die Ermittlung der wenigstens einen Geländeart im Bereich des Ortes, hier können auch mehrere Geländearten bestimmt werden, also neben der Straße. Schließlich wird in Abhängigkeit von der wenigstens einen Geländeart und von Fahrzeugdaten, beispielsweise Beschleunigungen, Geschwindigkeiten, Fahrrichtung, die Unfallwahrscheinlichkeit bestimmt. Die Unfallwahrscheinlichkeit bestimmt dann, wie Rückhaltesysteme angesteuert werden oder wie ein Eingriff in eine Fahrdynamikregelung vorgenommen wird, um einer möglichen Gefahrensituation präventiv zu begegnen. Diese Ansteuerung und Eingriffe werden umso drastischer, umso höher die Unfallwahrscheinlichkeit ist. Bei Rückhaltesystemen kann hier insbesondere auf reversible Rückhaltesysteme, wie es reversible Gurtstraffer sind, zurückgegriffen werden, denn diese können als Vorstrammer bereits frühzeitig angezogen werden, um einen optimalen Schutz für die Insassen zu erreichen. Eine weitere Möglichkeit ist aufgrund der Unfallwahrscheinlichkeit einen Auslösealgorithmus für Rückhaltesysteme zu beeinflussen. Dieser kann aufgrund der Unfallwahrscheinlichkeit bereits frühzeitig schärfer geschaltet werden. Das heißt Schwellen, die im Auslösealgorithmus durch das Auslösekriterium überschritten werden müssen, können hier niedriger gesetzt werden.

Durch die in den abhängigen Ansprüchen aufgeführten Maßnahmen und Weiterbildungen sind vorteilhafte Verbesserungen der in den unabhängigen Patentansprüchen angegebenen Vorrichtung bzw. Verfahren möglich.

Besonders vorteilhaft ist, dass das Ortungssignal mittels einer satellitengestützten Ortungsvorrichtung erzeugt wird. Dazu gehört vorzugsweise ein GPS-Empfänger, es sind aber auch andere Systeme wie das zukünftige Galileo-System hier möglich. Alternativ wäre auch eine Ortung über Mobilfunksignale möglich, wie sie aus der Literatur bereits bekannt sind.

Darüber hinaus ist es von Vorteil, dass als Fahrzeugdaten neben den bereits erwähnten Beschleunigungs- und/oder Geschwindigkeitsdaten in unterschiedlichen Raumrichtungen auch der Schwimmwinkel oder auch ein ESP-Signal verwendet werden können. Alle diese Daten liefern Aussagen darüber, wie hoch die Unfallwahrscheinlichkeit im Moment ist. Im weiteren können auch externe Sensoriken wie ein Regensensor oder auch eine Precrashsensorik hier berücksichtigt werden, um die Unfallwahrscheinlichkeit zu bestimmen. Insbesondere ein Regensensor kann zur Bestimmung der Straßenverhältnisse verwendet werden. Die Schätzung der Straßenverhältnisse beeinflusst dann die Bestimmung der Unfallwahrscheinlichkeit. Das ESP-Steuergerät und auch der Regensensor oder weitere Komponenten, die mit der erfindungsgemäßen Vorrichtung verbindbar sind, können beispielsweise über einen CAN (Controller Area Network)-Bus mit ihr verbunden sein.

### Zeichnung

Ausführungsbeispiele der Erfindung sind in der Zeichnung dargestellt und werden in der nachfolgenden Beschreibung näher erläutert.

### Es zeigen:

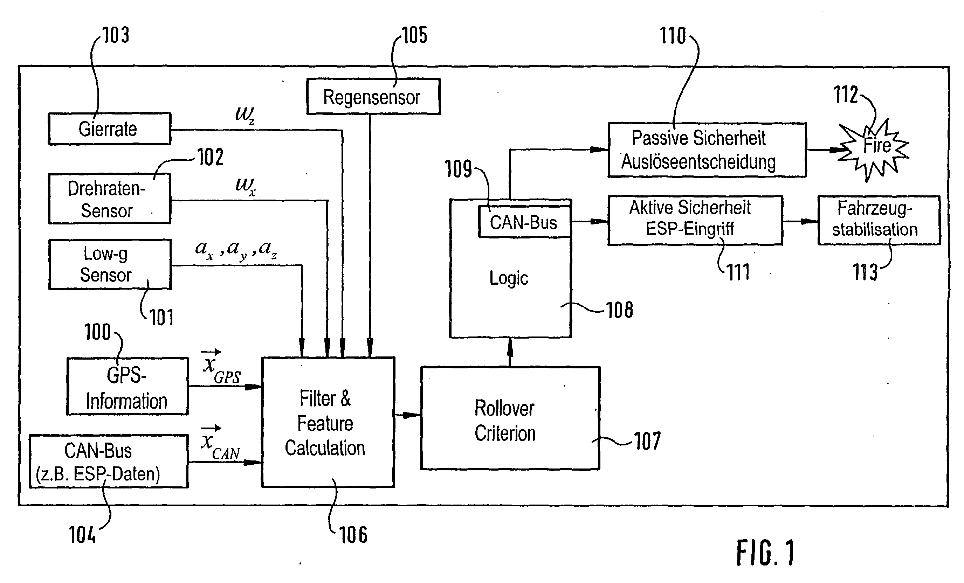

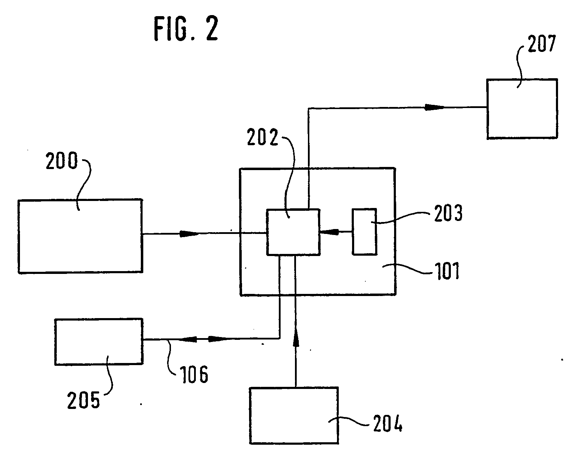

Figur 1 einen möglichen Signalverlauf des erfindungsgemäßen Verfahrens und Figur 2 ein Blockschaltbild der erfindungsgemäßen Vorrichtung.

### Beschreibung

Zahlen aus den USA belegen die Bedeutung der passiven Sicherheit bei Fahrzeugüberschlägen. Im Jahre 1999 waren rund 31 % aller tödlichen Einzelfahrzeugunfälle auf einen Überschlag zurückzuführen. Im gesamten Unfallgeschehen nimmt der Fahrzeugüberschlag einen Anteil von rund 7 % ein. Daher wurden Konzepte für die Überrollsensierung entwickelt. Dadurch ist es insbesondere gewährleistet, dass Sicherheitsvorrichtungen wie Gurtstraffer, Kopf-Airbag und Überrollbügel rechtzeitig aktiviert werden und sich somit das Verletzungsrisiko für den Insassen in einem Rollover-Fall verringert. Dabei wird, wie in den Schriften DE 100 19 416 A1 und DE 100 19417 A1 beschrieben, ein Signal eines Drehratensensors und von zwei Beschleunigungssensoren ausgewertet. Der Drehratensensor ermittelt nach dem Kreiselprinzip die Rotationsgeschwindigkeit um die Fahrzeuglängsachse. Die Beschleunigungssensoren messen zusätzlich die Fahrzeugbeschleunigung in Fahrzeugquer- und Fahrzeugvertikalrichtung. Im Hauptalgorithmus wird die Drehrate ausgewertet. Mit den Messwerten der Beschleunigungssensoren wächst zum einen die Wahrscheinlichkeit für die Detektion eines Überschlagvorgangs, z.B. eine Rampe, eine Böschung oder ein fahrdynamisch reibungsinduzierter Überschlag, zum anderen dienen diese Werte der Plausibilitätsprüfung. Erkennt der Drehratenalgorithmus einen Überschlag, werden die Sicherheitsvorrichtungen nur bei gleichzeitiger Freigabe durch die Plausibilitätskontrolle aktiviert.

Erfindungsgemäß wird nun unter Zuhilfenahme eines Ortungssignals und zusätzlich aktuellen Fahrzeugdaten eine Unfallwahrscheinlichkeit geschätzt, mit der im bestehenden Gelände beispielsweise ein Überrollvorgang stattfinden könnte. Kern ist, die aktuellen sowie zukünftigen Positionen des Fahrzeugs auf der Straße bzw. im Gelände bei der Auswertung zu berücksichtigen, um ggf. in das Fahrzeugverhalten aktiv einzugreifen oder aber entsprechende Maßnahmen für eine Auslöseentscheidung von Rückhaltemitteln zu ergreifen. Insbesondere reversible Rückhaltemittel können hier zum Einsatz kommen.

Figur 1 zeigt einen möglichen Signalverlauf des erfindungsgemäßen Verfahrens. In einer Auswertung gelangen verschiedene Sensorsignale. Diese Auswertung 106 erhält ein Ortungssignal 100, das hier mit x_{GPS} bezeichnet ist. Über einen CAN-Bus 104 erhält die Auswertung 106 Fahrdynamikdaten von einem ESP-Steuergerät. Von einem Block 101 erhält die Auswertung 106 Beschleunigungswerte in verschiedenen Raumrichtungen, beispielsweise a_{X}, a_{Y}, a_{Z}. Von einem Drehratensensor wird die Drehrate um die Fahrzeuglängsachse ω_{X} erhalten und von einem Gierratensensor 103 die Gierrate, also die Drehung um die Fahrzeugvertikalachse. Von einem Regensensor 105 erhält die Auswertung 106 ein Signal, das daraufhinweist, ob es regnet oder nicht. Auch die Stärke des Regens kann hier vom Signal abgeleitet werden. Aus diesen Signalen, die wie hier gefiltert und ausgewertet werden, wird im Block 107 bestimmt, ob ein Überrollvorgang wahrscheinlich ist. Alternativ ist es hier möglich, dass allgemein die Unfallwahrscheinlichkeit bestimmt wird. Die Unfall wahrscheinlichkeit kann auch solche Ereignisse umfassen, die eintreten, wenn ein vorgegebenes Fahrverhalten verlassen wird, beispielsweise ein Ausbrechen bei einer Kurvenfahrt.

Im Block 108 wird dann entschieden, ob Rückhaltesysteme und eine Fahrdynamikregelung aktiviert werden sollen, um aufgrund der Unfallwahrscheinlichkeit diese Gefahrsituation präventiv zu vermeiden. Die Rückhaltesysteme 110 werden dahingehend angesteuert, dass eine Auslöseentscheidung 112 getroffen wird. Die Fahrdynamikregelung 111 wird über einen CAN-Bus 109 angesteuert. Die Fahrdynamikregelung 111 wird derart beeinflusst, dass es zu einer Fahrzeugstabilisierung 113 kommen soll.

Figur 2 zeigt in einem Blockschaltbild die erfindungsgemäße Vorrichtung. In einem Airbagsteuergerät 201 ist ein Prozessor 202 angeordnet, der über einen ersten Dateneingang von einer im Steuergerät 201 angeordneten Inertialsensorik 203 Beschleunigungswerte in verschiedenen Raumrichtungen und Drehraten, darunter auch die Gierrate erhält. Über einen zweiten Dateneingang erhält der Prozessor 202 von einer außerhalb des Steuergeräts 201 angeordneten Ortungsvorrichtung 200 ein Ortungssignal. Dieses Ortungssignal wird entweder im Prozessor 202 mit abgespeicherten Kartenwerten und aktuellen Wetterdaten verglichen, um die Unfallwahrscheinlichkeit zu bestimmen. Es kann jedoch auch sein, dass die Ortungsvorrichtung 200 bereits diese Auswertung durchführt und nur noch eine Unfallwahrscheinlichkeit zum Prozessor 202 überträgt, die dann mit weiteren Sensordaten verknüpft wird, um diese Unfallwahrscheinlichkeit genauer zu bestimmen. Zur Ortungsvorrichtung 200 kann hier ein Navigationsgerät oder aber auch nur ein GPS-Empfänger verwendet werden. Über einen dritten Dateneingang ist der Prozessor 202 mit einem Regensensor 204 verbunden. In Abhängigkeit vom Signal des Regensensors 204 erkennt der Prozessor 202, ob es regnet und wie stark der Regen ist. Auch dieses Signal wird zur Berechnung der Unfallwahrscheinlichkeit verwendet und beeinflusst diese entsprechend, so dass die Unfallwahrscheinlichkeit sehr genau bestimmt werden kann. Auch die Signale der Inertialsensorik 203 werden zur Bestimmung der Unfallwahrscheinlichkeit verwendet. Über einen CAN-Bus 206 ist der Prozessor 202 mit einem ESP-Steuergerät 205 verbunden. Das ESP-Steuergerät 205 liefert ebenfalls Fahrdynamikdaten und kann auch selbst die Bestimmung der Unfallwahrscheinlichkeit übernehmen. Der Prozessor 202 oder aber auch das Steuergerät 205 übernehmen dann die Bestimmung der Unfallwahrscheinlichkeit, in Abhängigkeit davon wird die Fahrdynamik-Regelung 205 und/oder ein Rückhaltesystem 207, das sich außerhalb des Steuergeräts 201 befindet, angesteuert. Bei dem Rückhaltesystem 207 kann es sich um Airbags, Gurtstraffer, Überrollbügel und weitere Rückhaltemittel handeln, die entweder reversibel oder auch pyrotechnisch ausgebildet sind. Die Unfallwahrscheinlichkeit wird im Prozessor 202, wenn dieser diese berechnet, mit Schwellwerten verglichen, um zu einer genauen Ansteuerung der Rückhaltemittel bzw. der Fahrdynamikregelung zu kommen. Dabei können auch Teilunfallwahrscheinlichkeiten berechnet werden, um beispielsweise die Unfallwahrscheinlichkeit für ein Ausbrechen oder für ein Überrollen oder für ein Schleudern zu bestimmen, um dann den geeigneten Eingriff vorzunehmen.

Es ist weiterhin möglich, dass auch in Abhängigkeit von der aktuellen Straße, die eine vorgegebene Geschwindigkeitsbegrenzung hat, einen Eingriff derart in die Fahrdynamikregelung vorzunehmen, dass es mit dem Fahrzeug nicht mehr möglich ist, schneller als diese vorgegebene Geschwindigkeitsgrenze zu fahren. Dies bezeichnet man als speed limiter.

Die Schätzungen der Unfallwahrscheinlichkeit beinhalten demnach Informationen für unfallrelevante Kurven, aber auch Prognosen für Kurven, die mit der aktuellen Fahrzeuggeschwindigkeit nicht mehr gefahren werden können. Das erhaltene Ergebnis kann dann an das ESP-Steuergerät 205 übermittelt werden, welches dann aktiv in das Fahrgeschehen eingreifen kann im Sinne einer Fahrdynamikregelung und Überschlagsvermeidung. Alternativ kann diese Information als Hilfsgröße oder Vorinformation bei der Detektion eines Überrollvorgangs eingesetzt werden. Dies ist möglich, indem für die Auslöseentscheidung und deren Zeitpunkt die örtliche Umgebung gezielt berücksichtigt wird. Dies kann potenzielle Indikatoren für die Überrollvorgänge beinhalten, wie beispielsweise Straßenverläufe mit scharfen Kurven, eine Geländeform und Umgebung, handelt es sich beispielsweise um Sand, Gras, Böschungen, Bäume usw. Desweiteren kann diese Information ebenfalls für die Auslösung von Rückhaltemitteln verwendet werden, die anderen Unfalltypen zugeordnet sind, wobei dafür auch beispielsweise andere Beschleunigungs- und Crash-Signale verwendet werden können. Ebenfalls denkbar sind gegebenenfalls auch vorausschauende Sensorsignale aus radarbasierten Systemen. Damit ergeben sich wesentliche Vorteile bei der Erkennung von potenziellen Unfallsituationen bei der aktiven Reaktion auf das Fahrverhalten sowie bei der Aktivierung von Rückhaltemitteln, wenn Ortungssignale für die Überrolldetektion und Überrollvermeidung verwendet werden.

Kernelemente der Erfindung ist die Ortungsvorrichtung und Mittel zur Bestimmung der Unfallwahrscheinlichkeit. Weitere Sensordaten von anderen Sensorsystem können zur Verfeinerung der Schätzung der Unfallwahrscheinlichkeit hinzugezogen werden.

## Patentansprüche

1. Verfahren zur Bestimmung einer Unfallwahrscheinlichkeit eines Fahrzeugs, wobei mittels eines Ortungssignals (100) der Ort des Fahrzeugs bestimmt wird, wobei die Unfallwahrscheinlichkeit in Abhängigkeit von einem Ortungssignal (100) bestimmt wird, wobei in Abhängigkeit des Orts die wenigstens eine Geländeart im Bereich des Orts bestimmt wird und in Abhängigkeit von der wenigstens einen Geländeart und von Fahrzeugdaten (ω_{Z}, ω_{X}, a_{X}, a_{Y}, a_{Z}) die Unfallwahrscheinlichkeit bestimmt wird, **dadurch gekennzeichnet, dass** die Unfallwahrscheinlichkeit bestimmt, wie ein Rückhaltesystem (207) und/oder eine Fahrdynamikregelung (205) angesteuert werden.

2. Verfahren nach Anspruch 1, **dadurch gekennzeichnet, dass** das Ortungssignal mittels einer satellitengestützten Ortungsvorrichtung (200) erzeugt wird.

3. Verfahren nach Anspruch 1, **dadurch gekennzeichnet, dass** als die Fahrzeugdaten die Beschleunigungen (a_{X}, a_{Y}, a_{Z}), die Geschwindigkeit (V) und/oder der Schwimmwinkel und/oder wenigstens ein ESP-Signal (x_{CAN}) verwendet werden.

4. Verfahren nach einem der vorhergehenden Ansprüche, **dadurch gekennzeichnet, dass** für die Unfallwahrscheinlichkeit wenigstens ein Signal einer weiteren Sensorik (105, 204) berücksichtigt wird.

5. Verfahren nach Anspruch 4, **dadurch gekennzeichnet, dass** ein Regensensor (105, 204) als die zusätzliche Sensorik verwendet wird.

6. Vorrichtung zur Bestimmung einer Unfallwahrscheinlichkeit eines Fahrzeugs, wobei die Vorrichtung derart konfiguriert ist, daß die Vorrichtung ein Ortungssignal einer mit der Vorrichtung verbindbaren Ortungsvorrichtung (200) zur Bestimmung der Unfallwahrscheinlichkeit verwendet, wobei die Vorrichtung derart konfiguriert ist, dass in Abhängigkeit des Ortes des Fahrzeugs, der mittels des Ortungssignals (100) bestimmt wird, die wenigstens eine Geländeart im Bereich des Ortes bestimmt wird und in Abhängigkeit von der wenigstens einen Geländeart und von Fahrzeugdaten (w_{z}, wₓ, aₓ, a_{y}, a_{z}) die Unfallwahrscheinlichkeit bestimmt wird, **dadurch gekennzeichnet, dass** die Vorrichtung mit einem Rückhaltesystem (207) und/oder einer Fahrdynamikregelung (205) verbindbar ist, wobei die Unfallwahrscheinlichkeit bestimmt wird, wie die Vorrichtung das Rückhaltesystem und/oder die Fahrdynamikregelung ansteuert, dass die Vorrichtung mit einem Block (108) versehen ist, in dem entschieden wird, ob das Rückhaltesystem (207) und/oder die Fahrdynamikregelung (205) aktiviert werden soll(en), um aufgrund der Unfallwahrscheinlichkeit eine Gefahrensituation präventiv zu vermeiden ,

7. Vorrichtung nach Anspruch 6, **dadurch gekennzeichnet, dass** die Vorrichtung mit einem Regensensor (204) verbindbar ist.

8. Vorrichtung nach Anspruch 6 oder 7, **dadurch gekennzeichnet, dass** die Vorrichtung derart konfiguriert ist, dass die Vorrichtung aus dem Ortungssignal und/oder weiteren Signalen eine Schätzung über die Straßenverhältnisse angibt, wobei diese Schätzung bei der Bestimmung der Unfallwahrscheinlichkeit berücksichtigt wird.

## Claims

1. Method for determining the probability of an accident for a vehicle, wherein a locating signal (100) is used to determine the location of the vehicle, wherein the probability of an accident is determined as a function of a locating signal (100), wherein the at least one type of terrain in the region of the location is determined as a function of the location, and the probability of an accident is determined as a function of the at least one type of terrain and of vehicle data (ω_{z}, ωₓ, aₓ, a_{y}, a_{z}), **characterized in that** the probability of an accident determines how a restraining system (207) and/or a vehicle movement dynamics control system (205) are actuated.

2. Method according to Claim 1, **characterized in that** the locating signal is generated by means of a satellite-supported locating device (200).

3. Method according to Claim 1, **characterized in that** the accelerations (aₓ, a_{y}, a_{z}), the velocity (V) and/or the attitude angle and/or at least one ESP signal (x_{CAN}) are used as the vehicle data.

4. Method according to one of the preceding claims, **characterized in that** at least one signal from a further sensor system (105, 204) is taken into account for the probability of an accident.

5. Method according to Claim 4, **characterized in that** a rain sensor (105, 204) is used as the additional sensor system.

6. Device for determining the probability of an accident for a vehicle, wherein the device is configured in such a way that the device uses a locating signal of a locating device (200), which can be connected to the device, to determine the probability of an accident, wherein the device is configured in such a way that the at least one type of terrain in the region of the location is determined as a function of the location of the vehicle which is determined by means of the locating signal (100), and the probability of an accident is determined as a function of the at least one type of terrain and of vehicle data (w_{z}, wₓ, aₓ, a_{y}, a_{z}), **characterized in that** the device can be connected to a restraining system (207) and/or a vehicle movement dynamics control system (205), wherein the probability of an accident determines how the device actuates the restraining system and/or the vehicle movement dynamics control system, **in that** the device is provided with a block (108) in which it is decided whether the restraining system (207) and/or the vehicle movement dynamics control system (205) is/are to be activated in order to preventively avoid a hazardous situation on the basis of the probability of an accident.

7. Device according to Claim 6, **characterized in that** the device can be connected to a rain sensor (204).

8. Device according to Claim 6 or 7, **characterized in that** the device is configured in such a way that the device gives an estimation of the road conditions on the basis of the locating signal and/or further signals, wherein this estimation is taken into account in the determination of the probability of an accident.

## Revendications

1. Procédé de détermination de la probabilité d'accident d'un véhicule selon lequel
à l'aide d'un signal de localisation (100) on détermine le lieu du véhicule et
on détermine la probabilité d'accident en fonction d'un signal de localisation (100),
en fonction du lieu on détermine au moins un type de terrain dans l'environnement du lieu et en fonction d'au moins un type de terrain et des données du véhicule (ω_{z}, ωₓ, aₓ, a_{y}, a_{z}) on détermine la probabilité d'accident,
**caractérisé en ce que**
la probabilité d'accident détermine la manière de commander à un système de retenue (207) et/ou une régulation dynamique de roulage (205).

2. Procédé selon la revendication 1,
**caractérisé en ce qu'**
on génère le signal de localisation par un dispositif de localisation satellitaire (200).

3. Procédé selon la revendication 1,
**caractérisé en ce que**
comme données du véhicule, on utilise les accélérations (aₓ, a_{y}, a_{z}), la vitesse (V) et/ou l'angle de flottement et/ou un signal ESP (x_{CAN}).

4. Procédé selon l'une quelconque des revendications précédentes,
**caractérisé en ce que**
pour la probabilité d'accident, on tient compte d'au moins un signal d'autres capteurs (105, 204).

5. Procédé selon la revendication 4,
**caractérisé en ce qu'**
on utilise un générateur de puissance (105, 204) comme autre capteur.

6. Dispositif pour déterminer la probabilité d'accident d'un véhicule selon lequel le dispositif est configuré de façon à utiliser un signal de localisation d'un dispositif de localisation (200) relié au dispositif pour déterminer la probabilité d'accident, le dispositif étant configuré pour qu'en fonction du lieu du véhicule déterminé à l'aide du signal de localisation (100), on détermine au moins un type de terrain dans l'environnement du lieu et en fonction de ce type de terrain et des données du véhicule (w_{z}, wₓ, aₓ, a_{y}, a_{z}) on détermine la probabilité d'accident,
**caractérisé en ce que**
le dispositif est relié à un système de retenue (207) et/ou à une régulation de dynamique de roulage (205),
la probabilité d'accident détermine comment le dispositif commande le système de retenue et/ou la régulation de la dynamique de roulage,
le dispositif est muni d'un bloc (108) qui décide si le système de retenue (207) et/ ou la régulation de la dynamique de roulage (205) doit (doivent) être activé(s), pour éviter de manière préventive une situation de risque en fonction de la probabilité d'accident.

7. Dispositif selon la revendication 6,
**caractérisé en ce que**
le dispositif est relié à un capteur de pluie (204).

8. Dispositif selon la revendication 7 ou 8,
**caractérisé en ce que**
le dispositif est configuré pour qu'à partir du signal de localisation et/ou d'autres signaux il donne une évaluation des conditions de circulation, cette évaluation étant prise en compte pour déterminer la probabilité d'accident.
